# EUROPEAN PATENT APPLICATION

(11) **EP 1 619 445 A1**
(43) Date of publication of application: **25.01.2006**
(21) Application number: 05425523.7
(22) Date of filing: 21.07.2005
(51) Int. Cl.: F24D 12/02

(54) **Wall-hung sealed combustion boiler with external economiser device**

(30) Priority: 21.07.2004 IT MC20040028 U
(71) Applicant: LN 2 S.R.L., 62010 Montecassiano MC (IT)
(72) Inventor: Natalini, Lino, 62100 Macerata (IT)
(74) Representative: Baldi, Claudio

(57) **Abstract**

The present invention refers to a wall-hung sealed combustion boiler provided with an external economiser device used to recover the condensation heat of the steam contained in fumes ejected in the air.

## Description

The present patent application refers to a wall-hung sealed combustion boiler provided with an external economiser device used to recover the condensation heat of the steam contained in fumes ejected in the air.

Sealed combustion boilers are normally used to produce hot water for sanitary equipment and/or radiators of the air heating system and are characterised in that they have a hermetically sealed fire-box held in light depression by a suction fan used to convey fumes in the exhaust conduit.

The exhaust conduit is normally coaxial and internal to a second conduit with larger diameter used to suck the comburent air that fuels the flame delivered by the burner nozzles.

In other words, while fumes are ejected outside through the internal exhaust pipe, the external air is sucked in the fire-box through the annular space bordered by the two coaxial pipes, it being evident that the passage in the said space is used to favour thermal exchange between the two upstream fluids, thus allowing advantageous pre-heating of comburent air.

An economiser device has been recently used to improve the thermal performance of the said boilers by recovering the latent vaporization heat absorbed by the steam contained in combustion products.

In other words, boilers are provided with a condenser used to pre-heat cold water returning to the boiler from peripheral radiators of the heating system.

More exactly, the surface exchanger condenser comprises a body provided with one fume inlet and one fume outlet and an internal tube bank used for cold water returning from radiators. The temperature of cold water is sufficiently low to cause condensation of the steam contained in fumes, thus pre-heating water.

The constructive solution consists in installing the said condenser inside the boiler body, in a suitable housing immediately above the hood that covers the fire-box and is provided with the external suction fan.

This involves a number of expensive and difficult modifications, especially with reference to the hood, which must be suitably shaped to leave an empty space used to contain the said condenser.

Another modification must be made to exhaust conduits between the exhaust conduit and the suction fan, because fumes must be first conveyed towards the condenser and then towards the conduit used to exhaust them in the air.

In other words, manufacturers of wall-hung sealed combustion boilers are forced to produce different hoods and unions according to the boiler model, and according to the presence of the aforementioned economiser device.

The purpose of the present invention is to find a solution to the aforementioned drawbacks by devising a standard internal combustion boiler provided with economiser device, without requesting prior modifications to internal hood and unions between the fume suction fan and exhaust conduit.

In order to achieve the aforementioned purposes, the boiler of the invention is provided with connections for an external condenser situated above the boiler body in central position with respect to the outlet of the union fitting normally provided with the boiler that connects the fume suction fan to the fume exhaust pipe.

In particular, the condenser is provided with an opposite coaxial pair of outlets with vertical axis, respectively for ascending fume inlet and outlet.

In addition to the fact that this solution does not require the aforementioned modifications, additional advantages are also provided, such as the use of fast connections for the hydraulic connection between condenser and internal heat exchanger, easy condenser inspection and maintenance, unchanged access to the boiler internal components.

For major clarity the description of the boiler of the invention continues with reference to the enclosed drawings, which are intended for purposes of illustration only and not in a limiting sense, in which:
- Fig. 1 is a diagrammatic view of the structural configuration of a standard sealed combustion boiler without economiser;

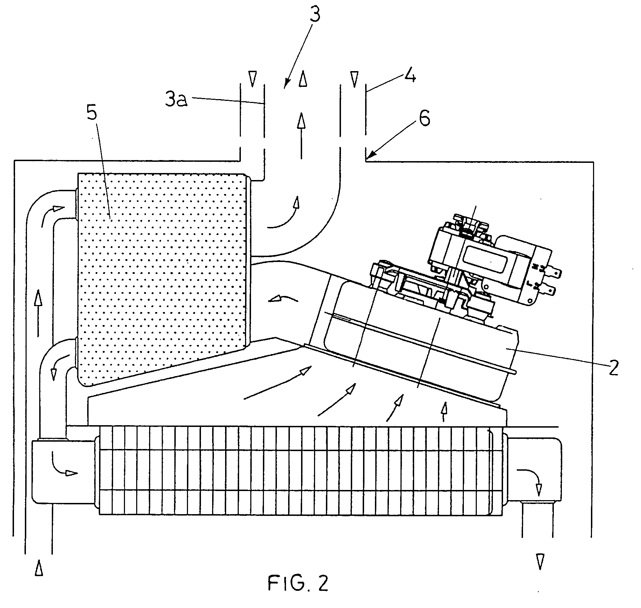

- Fig. 2 is a diagrammatic view of the structural configuration of a standard sealed combustion boiler provided of internal economiser of known type;
- Fig. 3 is a diagrammatic view of the structural configuration of the sealed combustion boiler of the invention provided with external economiser.

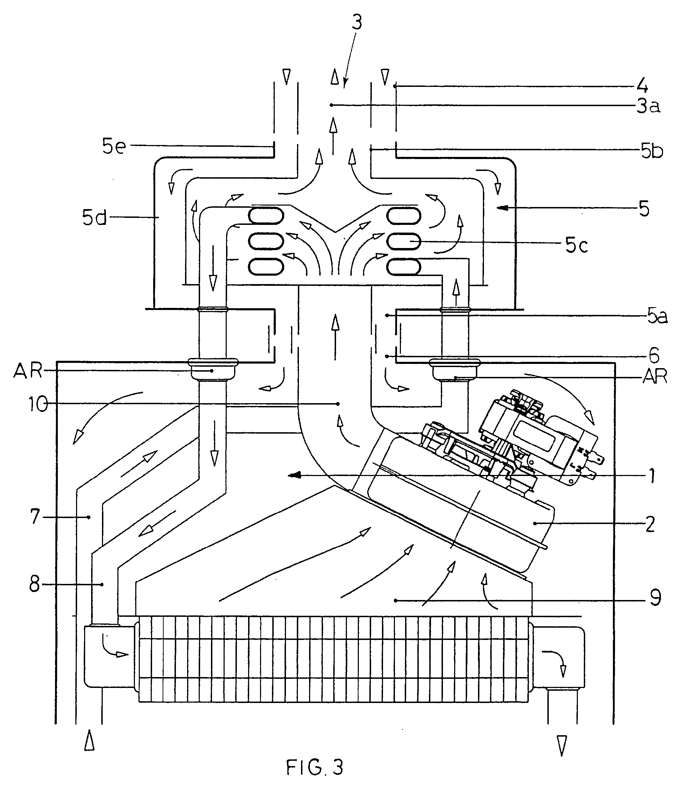

With reference to Figure 3, the boiler (1) of the invention comprises an electro-fan unit (2) used to suck fumes of the combustion chamber to convey them into an exhaust conduit (3) having at least a first section with vertical axis (3a).

As shown in the enclosed figures, the conduit (3) of known type (and therefore not included in the scope of the present invention) is coaxial and internal to a second conduit (4) with larger diameter, used to suck the comburent air that fuels the flame in the combustion chamber.

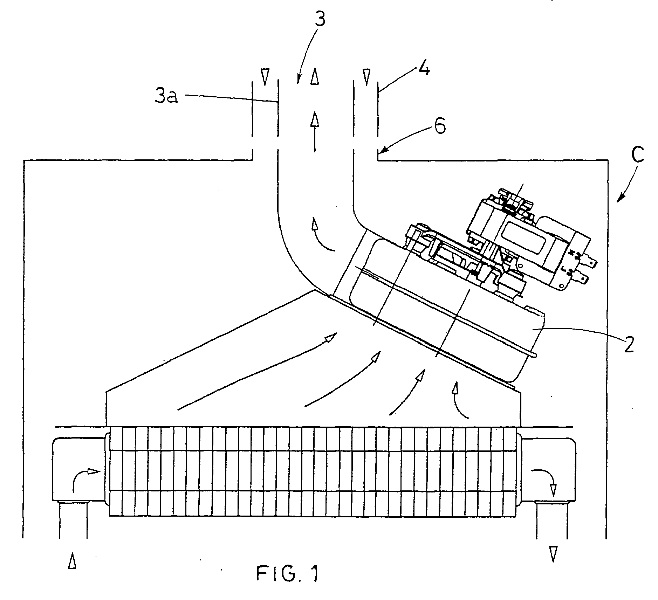

The boiler (1) of the invention is provided with an external condenser (5) that is provided with a lower inlet (5a) designed to be directly inserted into the fume exhaust nozzle (6), of the type normally used in boilers (C) without condenser (5), as shown in Fig. 1.

The condenser (5) is provided with a upper outlet (5b) designed to be directly inserted into the initial section (3a) of the conduit (3) that is perfectly identical to the conduit used in combination with a boiler (C) without condenser (5), as shown in Fig. 1.

The tube bank (5c) contained inside the condenser (5) is hydraulically connected to the boiler (1) with fast connections (AR) by means of two pipes (7) and (8), the first pipe (7) is used to deviate cold water from the radiators towards the condenser (5), the second pipe (8) is used to recycle pre-heated water from the condenser (5) in the boiler.

A comparison between Figure 1 and 3 shows that the boiler (1) of the invention is not modified with respect to the internal hood (9) and the union (10) that connects the electro-fan unit (2) and the fume exhaust conduit (3).

A space (5d) is provided between the external body of the condenser (5) and the internal chamber that contains the tube bank (5c) and is used to eject fumes from the boiler (1). The space (5d) is used for passage of comburent air going to the combustion chamber and coming from the said conduit (4), which is inserted into a suitable nozzle (5e) on the condenser (5) in external position with respect to the fume ejection outlet (5b).

## Claims

1. Wall-hung sealed combustion boiler provided with external economiser device, of the type comprising an electro-fan unit (2) used to suck fumes of the combustion chamber and convey them into an exhaust conduit (3) having at least a first section with vertical axis (3a), boiler (1) **characterised in that** it is provided with an external condenser (5) with a lower inlet (5a) designed to be directly inserted into the nozzle (6) used to eject fumes from the boiler (1), and an upper outlet (5b) designed to be directly inserted into the initial section (3a) of the conduit (3); it being provided that the tube bank (5c) contained in the condenser (5) is hydraulically connected to the boiler (1) with fast connections (AR) by means of two pipes (7) and (8), the first pipe (7) being used to deviate cold water from radiators towards the condenser (5), and the second pipe (8) being used to recycle pre-heated water from the condenser (5) in the boiler (1).

2. Wall-hung sealed combustion boiler with external economiser device, as defined in claim 1, **characterised in that** a space (5d) is provided between the external body of the condenser (5) and the internal chamber that contains the tube bank (5c), with space (5d) being used for passage of comburent air going to the combustion chamber.
